# EUROPÄISCHE PATENTSCHRIFT

(11) **EP 2 648 925 B1**
(45) Veröffentlichungstag und Bekanntmachung des Hinweises auf die Patenterteilung: **15.06.2016**
(21) Anmeldenummer: 11771186.1
(22) Anmeldetag: 21.10.2011
(51) Int. Cl.: B60C 11/03

(54) **FAHRZEUGLUFTREIFEN**
VEHICLE PNEUMATIC TIRE
PNEU DE VEHICULE

(30) Priorität: 07.12.2010 DE 102010061068
(43) Veröffentlichungstag der Anmeldung: 16.10.2013
(73) Patentinhaber: Continental Reifen Deutschland GmbH, 30165 Hannover (DE)
(72) Erfinder: SENG, Matthias, 30449 Hannover (DE); NOGA, Mareile, 30171 Hannover (DE); DIENSTHUBER, Franz, 30559 Hannover (DE)
(74) Vertreter: Preusser, Andrea
(86) Internationale Anmeldenummer: PCT/EP2011/068420
(87) Internationale Veröffentlichungsnummer: WO 2012/076235

(56) Entgegenhaltungen:
- EP-A1- 0 604 383
- EP-A1- 2 039 533
- EP-A2- 1 106 394

## Beschreibung

Die Erfindung betrifft einen Fahrzeugluftreifen, insbesondere für den Einsatz unter winterlichen Fahrbedingungen, mit einem Laufstreifen mit einem zentralen, in Profilpositive gegliederten Profilbereich und zwei von diesem durch breite in Umfangsrichtung verlaufende Umfangsrillen getrennten schulterseitigen Profilblockreihen, *welche Profilblöcke aufweisen, die durch Quernuten voneinander getrennt sind und welche eine* Breite aufweisen, die zwischen 20 % und 30 % der Bodenaufstandsflächenbreite des Laufstreifens beträgt, wobei die Profilblöcke in den schulterseitigen Profilblockreihen in ihrem mittleren Bereich jeweils durch eine sich zumindest im Wesentlichen in Umfangsrichtung erstreckende Rille, deren Breite zwischen 1 mm und 2,5 mm und deren Tiefe zwischen 2 mm und 3,5 mm beträgt, in zwei Blockteile geteilt sind, wobei die Rille zumindest einen Abschnitt mit einem zickzack- oder wellenförmigen Verlauf aufweist.

Ein Fahrzeugluftreifen der eingangs genannten Art ist aus der EP 0 604 383 A1 bekannt. Die im Wesentlichen in Umfangsrichtung verlaufenden Rillen, welche Profilblöcke in den schulterseitigen Profilblockreihen in ihrem mittleren Bereich in zwei Blockteile teilen, verlaufen derart, dass sie, in Draufsicht betrachtet, einer Kurve folgen, die sich zumindest abschnittsweise aus einer oder mehreren Kurven zweiter oder höherer Ordnung zusammensetzt. Diese Rillen dienen einerseits der Entlüftung von Einschnitten in den schulterseitigen Profilblöcken und andererseits sollen sie eine Reduktion des Abrollgeräusches bewirken, da sich durch ihre Kurvenform ihr Auftreffpunkt auf der Fahrbahn beim Latschdurchgang während des Abrollens des Reifens in axialer Richtung ändert. Dieser Effekt soll das Auftreten stehender Wellen innerhalb der Rillen vermindern. In Laufstreifen für Winterreifen ist es bekannt, drei Umfangsrillen und vier Profilblockreihen vorzusehen. Solche Profile haben sich in der Praxis bewährt, da sie einen guten Kompromiss zwischen den Trockenhandlingeigenschaften und der Seitenführung auf Schnee und Eis sowie den Trockenbremseigenschaften und der Traktion bzw. den Bremseigenschaften auf Schnee und Eis bieten. Bei dieser bekannten Gliederung des Laufstreifens in Profilblockreihen sind die schulterseitigen Profilblockreihen wesentlich breiter ausgeführt als die im mittleren Bereich des Laufstreifens verlaufenden zentralen Profilblockreihen. Die größere Breite der schulterseitigen Profilblockreihen bewirkt eine höhere Quersteifigkeit der Profilblöcke und ist daher für die Trockenhandlingeigenschaften des Reifens von Vorteil, erschwert jedoch ein Abplatten des Reifens in der Kontaktfläche mit der Fahrbahn, sodass eine schmälere Bodenaufstandsfläche als erwünscht entsteht und die Schulterbereiche des Laufstreifens, insbesondere durch den aus Querverspannungen entstehenden "Quer-Blindschlupf", in den äußeren Bereichen stärker abreiben. Die schmale Bodenaufstandsfläche beeinträchtigt insbesondere die Bremseigenschaften auf allen Fahrbahnoberflächen und hat negative Auswirkungen auf das Abriebsbild.

Der Erfindung liegt somit die Aufgabe zugrunde, einen Reifen bzw. einen Laufstreifen der eingangs genannten Art, derart auszuführen, dass die erwähnten Nachteile zumindest weitgehend beseitigt sind.

Gelöst wird die gestellte Aufgabe erfindungsgemäß dadurch, *dass jeder Blockteil mit einer Anzahl von jeweils parallel verlaufenden und sich im Wesentlichen parallel zu den Quernuten erstreckenden Einschnitten versehen ist, wobei sich die Einschnitte in dem einen Blockteil von jenen im anderen Blockteil bezüglich der Charakteristik ihres Verlaufes unterscheiden.*

Durch die sich in Umfangrichtung erstreckenden Rillen wird es den breiten schulterseitigen Profilblöcken ermöglicht, sich mit geringerer Querkraft in der Kontaktfläche mit der Fahrbahn abzuplatten. Dadurch entsteht auch ein etwas breiterer Footprint. Zusätzlich können die schulterseitigen Profilblöcke höhere Kräfte übertragen, da ein gewisser Querkraftanteil wegfällt. Der Laufstreifen hat daher auch ein entsprechend größeres Potential, Längs- bzw. Querkräfte aufzunehmen. Dies wirkt sich auf die Seitenführungseigenschaften und die Fahreigenschaften auf trockenen Fahrbahnen sowie die Bremseigenschaften und das Abriebsbild positiv aus. Der Stabilisierungseffekt des zickzack- oder wellenförmigen Abschnittes der Rille ist sowohl für den Abrieb als auch für die Handlingeigenschaften von Vorteil. *Durch die unterschiedliche Charakteristik des Verlaufes der Einschnitte in den schulterseitigen Profilblöcken lassen sich die Griffeigenschaften sowie die Umfangs- und die Quersteifigkeit der schulterseitigen Profilblöcke beeinflussen.*

Damit sich die seitlichen Profilblöcke möglichst gut mit geringer Querkraft in der Kontaktfläche zur Fahrbahn abplatten können, ist es von Vorteil, wenn die Rillen über einen Großteil ihrer Erstreckung gerade verlaufen.

Der Stabilisierungseffekt durch den zickzack- oder wellenförmigen Abschnitt ist nur in einem kleinen Teil der Erstreckung dieser Rille erforderlich und sollte die erwähnte Abplattung zulassen. Es ist daher von Vorteil, wenn der zickzack- oder wellenverlaufende Abschnitt *jeweils ein Endabschnitt der Rillen* ist.

Besonders vorteilhaft ist es, wenn die Einschnitte im außenseitig gelegenen Blockteil zumindest im Wesentlichen linear bzw. gerade verlaufen und wenn die Einschnitte im innenseitig gelegenen Blockteil zumindest einen Abschnitt aufweisen, der von einem anderen Abschnitt abgeknickt verläuft.

Weitere Merkmale, Vorteile und Einzelheiten der Erfindung werden nun anhand der Zeichnung, die schematisch ein Ausführungsbeispiel darstellt, näher beschrieben. Dabei zeigt die einzige Figur,

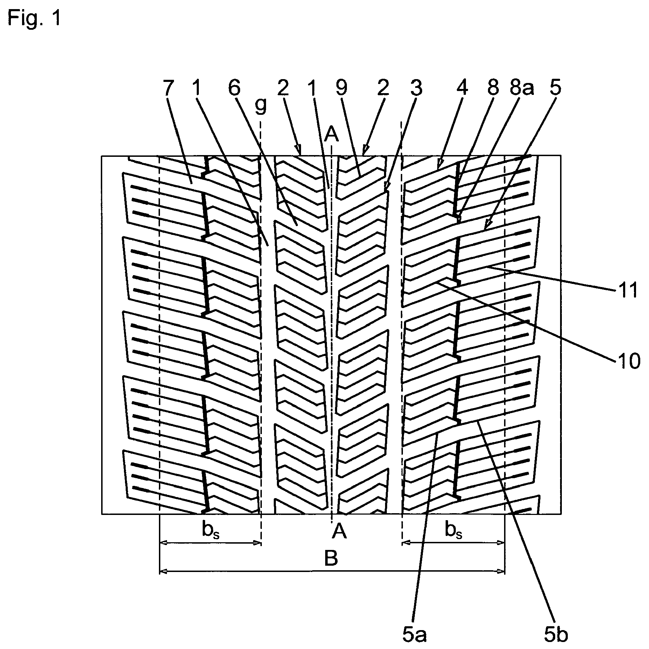

Fig. 1, eine Draufsicht auf einen Abschnitt der Abwicklung eines Laufstreifens eines Fahrzeugluftreifens mit einer Ausführungsvariante der Erfindung.

Fig. 1 zeigt einen Umfangsabschnitt eines Laufstreifens mit einem laufrichtungsgebunden ausgeführten Laufstreifenprofil. Die Erfindung ist jedoch auf laufrichtungsgebundene Laufstreifenprofile nicht beschränkt. Der Laufstreifen weist drei breite, in Umfangsrichtung umlaufende Umfangsrillen 1 auf, von welchen eine entlang des Reifenäquators A-A verläuft. Zu beiden Seiten dieser zentralen Umfangsrille 1 verlaufen zentrale Profilblockreihen 2, deren Profilblöcke 3 in Umfangsrichtung durch Quernuten 6 voneinander getrennt sind. Jede zentrale Profilblockreihe 2 ist durch eine weitere Umfangsrille 1 von einer schulterseitigen Profilblockreihe 4 getrennt. Mit B ist jene Breite des Laufstreifens bzw. Reifens bezeichnet, welche der Bodenaufstandsflächenbreite bei auf einer Felge positioniertem, aufgepumptem Reifen (unter Nenndruck und Nennlast gemäß E.T.R.T.O Standards) entspricht. Die beiden schulterseitigen Blockreihen 4, welche jeweils über die Bodenaufstandsflächenbreite B hinaus verlaufen, setzen sich ebenfalls aus Profilblöcken 5 zusammen, welche in Umfangsrichtung durch Quernuten 7 voneinander getrennt sind, deren Tiefe in Richtung zum Laufstreifenrand kontinuierlich geringer wird. Die äußere Gestalt der Profilblöcke 3, 5 sowie deren Anordnung und der sich daraus ergebende Verlauf der Quernuten 6 und 7 ist derart, dass der Laufstreifen ein üblicherweise als gepfeilt bezeichnetes Laufstreifenprofil aufweist. Dabei schließen die Quernuten 7 in den schulterseitigen Profilblockreihen 4 mit der Umfangsrichtung einen größeren Winkel ein als die Quernuten 6 in den beiden zentralen Profilblockreihen 2. Insbesondere beträgt der Winkel, den die Quernuten 7 mit der Umfangsrichtung einschließen, bis zu 80°, der Winkel den die Quernuten 6 mit der Laufstreifenquerrichtung einschließen, bis zu 60°. Bei der in Figur gezeigten Ausführungsvariante sind die Profilblöcke 3 in Draufsicht im Wesentlichen rhombenförmig, die Profilblöcke 5 in den schulterseitigen Profilblockreihen 4 sind in Laufstreifenquerrichtung langgestreckt und im Wesentlichen parallelogrammförmig, ihre Umfangserstreckung ist etwa halb so groß wie ihre Erstreckung in Laufstreifenquerrichtung. Die in Laufstreifenquerrichtung gemessene Breite bₛ der schulterseitigen Profilblockreihen 4, welche zwischen dem jeweiligen Laufstreifenrand (äußere Grenze der Bodenaufstandsflächenbreite B) und einer in Umfangsrichtung verlaufenden Geraden g ermittelt wird, welche die Profilblöcke 5 an deren am weitesten laufstreifeninnenseitig gelegenen Bereichen berührt, beträgt zwischen 20 % und 30 % der Bodenaufstandsflächenbreite B.

Die Profilblöcke 3 und 5 sind jeweils mit einer Anzahl von in jedem Profilblock 3, 5 parallel und im Wesentlichen parallel zu den die Quernuten 6 bzw. 7 verlaufenden Einschnitten 9, 10, 11 versehen, welche eine Breite zwischen 0,4 mm und 0,6 mm aufweisen. Die Einschnitte 9 in den Profilblöcken 3 verlaufen über einen Großteil ihrer Erstreckung gerade, ihre Endabschnitte sind gegensinnig zueinander vom geraden Abschnitt unter einem stumpfen Winkel abgeknickt.

Die Profilblöcke 5 in den schulterseitigen Profilblockreihen 4 weisen infolge der sich zu den Laufstreifenrändern verringernden Tiefe der Quernuten 7 und infolge ihrer großen Breite eine hohe Quersteifigkeit auf, welche für die Trockenhandlingeigenschaften des Reifens von Vorteil ist, aber ein Abplatten des Reifens beim Abrollen erschwert. Die Profilblöcke 5 sind daher jeweils durch eine sich in Umfangsrichtung bzw. im Wesentlichen in Umfangsrichtung erstreckende Rille 8, welche eine Breite von 1 mm bis 2,5 mm und eine Tiefe von 2 mm bis 3,5 mm, insbesondere eine Tiefe von 3 mm, aufweist, in Laufstreifenquerrichtung in Blockteile 5a, 5b geteilt, wobei die Teilung im mittleren Bereich der Profilblöcke 5 erfolgt. Die Rillen 8 verlaufen insbesondere und wie in Fig. 1 dargestellt über den Großteil ihrer Erstreckung gerade und unter einem kleinen spitzen Winkel von bis zu 10° zur Umfangsrichtung geneigt. Jede Rille 8 weist einen kurzen Zickzack-Abschnitt 8a auf, in Fig. 1 ist dieser Abschnitt einer der Endabschnitte. Der Abschnitt 8a bewirkt eine gegenseitige Stabilisierung der Blockteile 5a, 5b. Die kurzen zickzack- oder wellenförmige Abschnitte können auch an anderer Stelle im Verlauf der Rillen 8 vorgesehen sein. Die Rillen 8 ermöglichen es den breiten Profilblöcken 5, sich mit geringerer Querkraft beim Abrollen des Reifens an die Fahrbahn anzupassen, wodurch das erwünschte Abplatten des Reifens in der Kontaktfläche zum Untergrund unterstützt wird und ein breiterer Footprint entsteht. Durch die Rillen 8 sind die schulterseitigen Profilblöcke 5 auch in der Lage, höhere Kräfte zu übertragen, der Laufstreifen hat ein größeres Potential, Längs- und Querkräfte aufzunehmen.

Die in den Blockteilen 5a verlaufenden Einschnitte 10 sind analog zu den Einschnitten 9 ausgeführt, die Einschnitte 11 in den Blockteilen 5b verlaufen im Wesentlichen gerade bzw. linear und parallel zu den Quernuten 7. Diese eine unterschiedliche Charakteristik aufweisenden Einschnitte 10, 11 beeinflussen vorteilhaft die Umfangs- und Quersteifigkeit der Profilblöcke 5.

### Bezugszeichenliste

- 1: Umfangsrille
- 2: zentrale Profilblockreihe
- 3: Profilblock
- 4: schulterseitige Profilblockreihe
- 5: Profilblock
- 6: Quernut
- 7: Quernut
- 8: Rille
- 8a: Abschnitt
- 9: Einschnitt
- 10: Einschnitt
- 11: Einschnitt
- B: Breite
- bₛ: Breite
- g: Gerade

## Patentansprüche

1. Fahrzeugluftreifen, insbesondere für den Einsatz unter winterlichen Fahrbedingungen, mit einem Laufstreifen mit einem zentralen, in Profilpositive gegliederten Profilbereich und zwei von diesem durch breite in Umfangsrichtung verlaufende Umfangsrillen (1) getrennten schulterseitigen Profilblockreihen (4), *welche Profilblöcke (5) aufweist, die durch Quernuten (6) voneinander getrennt sind und welche eine* Breite (bₛ) aufweisen, die zwischen 20 % und 30 % der Bodenaufstandsflächenbreite (B) des Laufstreifens beträgt, wobei die Profilblöcke (5) in den schulterseitigen Profilblockreihen (4) in ihrem mittleren Bereich jeweils durch eine sich zumindest im Wesentlichen in Umfangsrichtung erstreckende Rille (8), deren Breite zwischen 1 mm und 2,5 mm und deren Tiefe zwischen 2 mm und 3,5 mm beträgt, in zwei Blockteile (5a, 5b) geteilt sind, wobei die Rille (8) zumindest einen Abschnitt (8a) mit einem zickzack- oder wellenförmigen Verlauf aufweist,
**dadurch gekennzeichnet,**
***dass*** *jeder Blockteil (5a, 5b) mit einer Anzahl von jeweils parallel verlaufenden und sich im Wesentlichen parallel zu den Quernuten (7) erstreckenden Einschnitten (10, 11) versehen ist, wobei sich die Einschnitte (10) in dem einen Blockteil (5a) von jenen im anderen Blockteil (5b) bezüglich der Charakteristik ihres Verlaufes unterscheiden.*

2. Fahrzeugluftreifen nach Anspruch 1, **dadurch gekennzeichnet, dass** die *die Profilblöcke (5) in zwei Blockteile (5a, 5b) teilenden Rillen* (8) über einen Großteil ihrer Erstreckung gerade verlaufen.

3. Fahrzeugluftreifen nach Anspruch 1 oder 2, **dadurch gekennzeichnet, dass** der zickzack- oder wellenförmig verlaufende Abschnitt (8a) *der die Profilblöcke (5) in zwei Blockteile (5a, 5b) teilenden Rillen* (8) jeweils ein Endabschnitt der Rillen (8) ist.

4. Fahrzeugluftreifen nach Anspruch 1, **dadurch gekennzeichnet, dass** die Einschnitte (11) im laufstreifenaußenseitig gelegenen Blockteil (5b) zumindest im Wesentlichen linear bzw. gerade verlaufen.

5. Fahrzeugluftreifen nach Anspruch 1, **dadurch gekennzeichnet, dass** die Einschnitte (10) im laufstreifeninnenseitig gelegenen Blockteil (5a) zumindest einen Abschnitt aufweisen, der von einem anderen Abschnitt abgeknickt verläuft.

## Claims

1. Pneumatic vehicle tyre, in particular for use in winter driving conditions, comprising a tread having a central profile region divided into profile positives and two shoulder-side tread bar rows (4) which are separated from said profile region by wide circumferential grooves (1) running in the circumferential direction and which have tread bars (5) that are separated from one another by transverse grooves (6) and have a width (bₛ) which is between 20% and 30% of the ground contact area width (B) of the tread, wherein the tread bars (5) in the shoulder-side tread bar rows (4) are in each case divided in their middle region into two bar parts (5a, 5b) by a groove (8) which extends at least substantially in the circumferential direction and the width of which is between 1 mm and 2.5 mm and the depth of which is between 2 mm and 3.5 mm, wherein the groove (8) has at least one portion (8a) with a zig-zag or wave-shaped course, **characterized**
**in that** each bar part (5a, 5b) is provided with a number of sipes (10, 11) respectively running parallel and extending substantially parallel to the transverse grooves (7), wherein the sipes (10) in one bar part (5a) differ from those in the other bar part (5b) with respect to the characteristic of their course.

2. Pneumatic vehicle tyre according to Claim 1, **characterized in that** the grooves (8) dividing the tread bars (5) into two bar parts (5a, 5b) run in a straight line over a large part of their extent.

3. Pneumatic vehicle tyre according to Claim 1 or 2, **characterized in that** the zig-zag or wave-shaped portion (8a) of the grooves (8) dividing the tread bars (5) into two bar parts (5a, 5b) is in each case an end portion of the grooves (8).

4. Pneumatic vehicle tyre according to Claim 1, **characterized in that** the sipes (11) in the bar part (5b) situated on the outer side of the tread run at least substantially linearly or in a straight line.

5. Pneumatic vehicle tyre according to Claim 1, **characterized in that** the sipes (10) in the bar part (5a) situated on the inner side of the tread have at least one portion that runs away at an angle from another portion.

## Revendications

1. Pneumatique de véhicule, en particulier pour l'utilisation dans des conditions de conduite hivernales, comprenant une bande de roulement avec une région profilée centrale divisée en profilés positifs et deux rangées de blocs profilés (4) du côté de l'épaulement séparés de celle-ci par des gorges périphériques larges (1) s'étendant dans la direction périphérique, lesquelles deux rangées de blocs profilés présentent des blocs profilés (5) qui sont séparés les uns des autres par des rainures transversales (6) et qui présentent une largeur (bₛ) qui est comprise entre 20 % et 30 % de la largeur de la surface d'appui au sol (B) de la bande de roulement, les blocs profilés (5) dans les rangées de blocs profilés du côté de l'épaulement (4) étant divisés dans leur région centrale à chaque fois par une gorge (8) s'étendant au moins essentiellement dans la direction périphérique, dont la largeur est comprise entre 1 mm et 2,5 mm et dont la profondeur est comprise entre 2 mm et 3, 5 mm, en deux parties de bloc (5a, 5b), la gorge (8) présentant au moins une portion (8a) avec une allure en zigzag ou ondulée,
**caractérisé en ce que**
chaque partie de bloc (5a, 5b) est pourvue d'une pluralité d'entailles (10, 11) s'étendant à chaque fois parallèlement et s'étendant essentiellement parallèlement aux rainures transversales (7), les entailles (10) dans l'une des parties de bloc (5a) se distinguant de celles dans l'autre partie de bloc (5b) en termes de leur allure caractéristique.

2. Pneumatique de véhicule selon la revendication 1, **caractérisé en ce que** les gorges (8) divisant les blocs profilés (5) en deux parties de bloc (5a, 5b) s'étendent en ligne droite sur une grande partie de leur étendue.

3. Pneumatique de véhicule selon la revendication 1 ou 2, **caractérisé en ce que** la portion (8a) s'étendant en zigzag ou sous forme ondulée des gorges (8) divisant les blocs profilés (5) en deux parties de bloc (5a, 5b) est dans chaque cas une portion d'extrémité des gorges (8).

4. Pneumatique de véhicule selon la revendication 1, **caractérisé en ce que** les entailles (11) s'étendent au moins sensiblement linéairement ou en ligne droite dans la partie de bloc (5b) située du côté extérieur de la bande de roulement.

5. Pneumatique de véhicule selon la revendication 1, **caractérisé en ce que** les entailles (10) dans la partie de bloc (5a) située du côté intérieur de la bande de roulement présentent au moins une portion qui s'étend sous forme coudée par rapport à une autre portion.
